# EUROPEAN PATENT SPECIFICATION

(11) **EP 3 958 073 B1**
(45) Date of publication and mention of the grant of the patent: **06.09.2023**
(21) Application number: 21174357.0
(22) Date of filing: 18.05.2021
(51) Int. Cl.: G05B 19/048

(54) **LINE CONNECTOR EXTRACTION FROM P&ID**
LEITUNGSVERBINDERENTNAHME AUS P&ID
EXTRACTION DE CONNECTEUR DE LIGNE À PARTIR D'UN P&ID

(30) Priority: 19.08.2020 US 202016997080
(43) Date of publication of application: 23.02.2022
(73) Proprietor: Rockwell Automation Technologies, Inc., Mayfield Heights, OH 44124-6188 (US)
(72) Inventor: MABOTE, Itumeleng, Mayfield Heights (US)
(74) Representative: Grünecker Patent- und Rechtsanwälte PartG mbB

(56) References cited:
- US-A1- 2017 293 418
- Howle: "Computer Interpretation of Process and Instrumentation Drawings", , 1 February 1995 (1995-02-01), XP055276699, Retrieved from the Internet: URL:http://cife.stanford.edu/sites/default /files/WP037.pdf [retrieved on 2016-05-31]

## Description

### BACKGROUND

The subject matter disclosed herein relates generally to industrial automation systems, and, for example, to development of human-machine interface applications.
US 2017/293418 A1 discloses a method for parsing information associated with an industrial process in an industrial process control system to identify equipment data associated with the industrial process. The method also includes receiving a selection of equipment. The method further includes identifying one or more shapes associated with the selected equipment. In addition, the method includes automatically generating at least one process graphic containing the one or more shapes and the equipment data.
Howles: "Computer Interpretation of Process and Instrumentation Drawings", 1 February 1995, discloses a proof-of-concept computer system for interpreting graphical component connectivity in Process and Instrumentation Drawings (P&IDs). The input drawing is a CAD file in DXF format. Drawing features are considered to be pipes or symbolic entities with geometrically constrained attachment ports. A hierarchical data structure is used to enable recognition of components in collinear and circuit complexes.
It is the object of the present invention to improve the efficiency of a controlled industrial process and the safety of connections between controlled equipment of an industrial control system.
This object is solved by the subject matter of the independent claims.
Embodiments are defined in the dependent claims.

The following presents a simplified summary in order to provide a basic understanding of some aspects described herein. This summary is not an extensive overview nor is it intended to identify key/critical elements or to delineate the scope of the various aspects described herein. Its sole purpose is to present some concepts in a simplified form as a prelude to the more detailed description that is presented later.

In one or more embodiments, a system is provided, comprising a drawing import component configured to import a piping and instrumentation diagram (P&ID) drawing representing an automation system to be monitored and controlled by an industrial controller; a parsing component configured to identify, based on analysis of the P&ID drawing, items of equipment that make up the automation system and pipe line connections between the items of equipment; a user interface component configured to render the P&ID drawing on a development interface; an equipment selection component configured to select, as selected equipment, a subset of the items of equipment identified via interaction with the development interface, and to identify a subset of the pipe line connections attached to the selected equipment; and a human-machine interface (HMI) project generation component configured to generate an HMI interface display comprising visualization objects representing the selected equipment and graphical pipe lines representing the subset of the pipe line connections, wherein the HMI interface display is configured to visualize operational or status data generated by the automation system.

Also, one or more embodiments provide a method for generating a human-machine interface (HMI) application, comprising importing, by an HMI development system comprising a processor, a piping and instrumentation diagram (P&ID) drawing representing an automation system to be monitored and controlled by an industrial controller; identifying, by the HMI development system based on analysis of the P&ID drawing, pieces of equipment that make up the automation system and pipe line connections between the pieces of equipment; rendering, by the HMI development system, the P&ID drawing on a development interface; selecting, by the HMI development system as selected equipment, a subset of the pieces of equipment identified by selection input received via the development interface; identifying, by the HMI development system, a subset of the pipe line connections attached to the selected equipment; and generating, by the HMI development system, an HMI interface display comprising graphical objects representing the selected equipment and graphical pipe lines representing the subset of the pipe line connections, wherein the HMI interface display is configured to render operational or status data generated by the automation system.

Also, according to one or more embodiments, a non-transitory computer-readable medium is provided having stored thereon instructions that, in response to execution, cause a human-machine interface (HMI) development system comprising a processor to perform operations, the operations comprising identifying, based on analysis of a P&ID drawing of an automation system, units of equipment that make up the automation system and pipe line connections between the units of equipment; rendering the P&ID drawing on a development interface; receiving, via interaction with the development interface, selection input that identifies selected equipment from the units of equipment; identifying a subset of the pipe line connections attached to the selected equipment; and generating an HMI interface display based on the selected equipment and the subset of the pipe line connections, wherein the HMI interface display is configured to render operational or status data generated by the automation system, and the generating comprises: adding, to the HMI interface display, graphical objects representing the selected equipment, and adding, to the HMI interface display, graphical pipe lines representing the subset of the pipe line connections.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a block diagram of an example industrial control environment.
FIG. 2 is a block diagram of an example HMI development system.
FIG. 3 is a diagram illustrating translation of a P&ID drawing into an HMI application by an HMI development system.
FIG. 4 is a diagram illustrating example data flows for importing a P&ID drawing and selecting equipment for inclusion in an HMI application.
FIG. 5 is an example P&ID drawing that can be imported into an HMI development system and used as the basis for a new HMI application.
FIG. 6 is a diagram illustrating generation of an HMI project file by an HMI development system.
FIG. 7 is a graph depicting a simplified pipe line path for an extracted pipe line.
FIG. 8a is a portion of an example P&ID drawing that includes a curved pipe line.
FIG. 8b is a graph depicting a simplified line path for an extracted curved pipe line.
FIG. 9a is a portion of an example P&ID drawing that includes a pipe line having a diagonal portion.
FIG. 9b is a graph depicting a simplified line path for an extracted pipe line having a diagonal portion.
FIG. 10 is a diagram illustrating generation of interlock recommendations based on information extracted from a P&ID drawing and predefined design rules.
FIG. 11 is a diagram illustrating an update of an HMI project file to incorporate an approved interlock.
FIG. 12 is a diagram illustrating export of an HMI project file to an HMI terminal device.
FIG. 13a is a flowchart of a first part of an example methodology for generating an HMI application for monitoring and controlling an industrial automation system or process.
FIG. 13b is a flowchart of a second part of the example methodology for generating the HMI application for monitoring and controlling an industrial automation system or process.
FIG. 13c is a flowchart of a third part of the example methodology for generating the HMI application for monitoring and controlling an industrial automation system or process.
FIG. 13d is a flowchart of a fourth part of the example methodology for generating the HMI application for monitoring and controlling an industrial automation system or process.
FIG. 14 is an example computing environment.
FIG. 15 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers, including cloud-based computing systems. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to inter" and "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

Industrial controllers, their associated I/O devices, motor drives, and other such industrial devices are central to the operation of modem automation systems. Industrial controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, C++, Python, Javascript, or other such platforms.

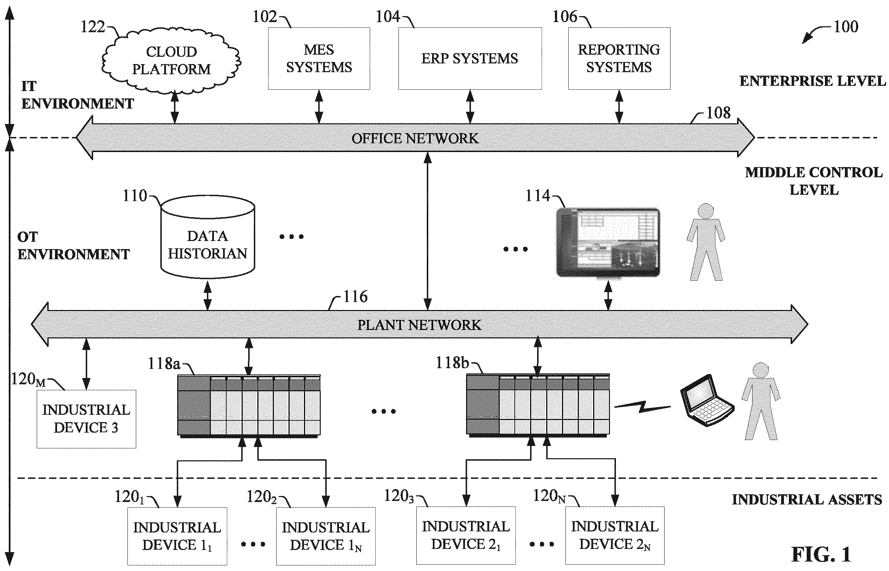

FIG. 1 is a block diagram of an example industrial environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial assets or systems (e.g., industrial machines). One or more industrial controllers 118 may also comprise a soft controller executed on a personal computer, on a server blade, or other hardware platform, or on a cloud platform. Some hybrid devices may also combine controller functionality with other functions (e.g., visualization). The control programs executed by industrial controllers 118 can comprise any conceivable type of code used to process input signals read from the industrial devices 120 and to control output signals generated by the industrial controllers, including but not limited to ladder logic, sequential function charts, function block diagrams, structured text, C++, Python, Javascript, etc.

Industrial devices 120 may include input devices that provide data relating to the controlled industrial systems to the industrial controllers 118, output devices that respond to control signals generated by the industrial controllers 118 to control aspects of the industrial systems, or devices that act as both input and output devices. Example input devices can include telemetry devices (e.g., temperature sensors, flow meters, level sensors, pressure sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot control inputs, valves, and the like. Some industrial devices, such as industrial device 120M, may operate autonomously on the plant network 116 without being controlled by an industrial controller 118.

Industrial controllers 118 may communicatively interface with industrial devices 120 over hardwired connections or over wired or wireless networks. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over the plant network 116 using, for example, a communication module or an integrated networking port. Exemplary networks can include the Internet, intranets, Ethernet, EtherNet/IP, DeviceNet, ControlNet, Data Highway and Data Highway Plus (DH/DH+), Remote I/O, Fieldbus, Modbus, Profibus, wireless networks, serial protocols, and the like. The industrial controllers 118 can also store persisted data values that can be referenced by the control program and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Some industrial environments may also include other systems or devices relating to specific aspects of the controlled industrial systems. These may include, for example, one or more data historians 110 that aggregate and store production information collected from the industrial controllers 118 and other industrial devices.

Industrial devices 120, industrial controllers 118, HMIs 114, associated controlled industrial assets, and other plant-floor systems such as data historians 110, vision systems, and other such systems operate on the operational technology (OT) level of the industrial environment. Higher level analytic and reporting systems may operate at the higher enterprise level of the industrial environment in the information technology (IT) domain; e.g., on an office network 108 or on a cloud platform 122. Such higher level systems can include, for example, enterprise resource planning (ERP) systems 104 that integrate and collectively manage high-level business operations, such as finance, sales, order management, marketing, human resources, or other such business functions. Manufacturing Execution Systems (MES) 102 can monitor and manage control operations on the control level given higher-level business considerations. Reporting systems 106 can collect operational data from industrial devices on the plant floor and generate daily or shift reports that summarize operational statistics of the controlled industrial assets.

During the design of an industrial process or automation system, piping and instrumentation diagrams (P&ID) are often used to illustrate the piping of the process flow together with the equipment and instrumentation that make up the automation system. P&ID drawings may be provided to control engineers in the form of a print-out, a portable document format (PDF) file, an image file, or another drawing file format. The P&ID drawings typically include standardized symbols and numbers for pipes, signal lines, instruments, groups of instruments, and other equipment (e.g., tanks, mixers, etc.). At a later stage of the design process, a control engineer may design a control system for the industrial process based on the P&ID drawing. This can involve development of an industrial control program and a corresponding HMI application for visualization of the process. Engineers must typically develop the HMI application by selecting and arranging graphical objects representing selected items of equipment within an HMI development environment, and manually drawing pipes between the equipment to reflect the real-word connections. This approach to HMI development process can be time-consuming and prone to error.

Also, when writing the control programming that will monitor and control the process represented by the P&ID drawings, engineers must typically program interlocks for certain control actions associated with a particular collection of equipment or devices. For example, a tank attached to an inlet pump may require a low tank level interlock that causes the pump to run when the tank's fill level is below a threshold. If the tank is attached to an outlet pump, another interlock may be necessary to prevent the outlet pump from running if the tank's fill level is below the threshold. In general, certain collections of equipment may require one or more standardized interlocks for reasons of safety or efficiency, or to prevent damage to equipment. In order to identify necessary interlocks, engineers must often study the P&ID drawings to identify arrangements of equipment (e.g., tanks, pumps, mixers, valves, level sensors, pressure sensors, flow meters, etc.) that require certain interlocks to be programmed. This approach may result in a number of interlocks being overlooked, and these missing interlocks may not be discovered until the installation and debug phase, or during normal operation.

To address these and other issues, one or more embodiments described herein provide an HMI development system that can analyze a P&ID drawing of an industrial automation system to identify items of equipment and the pipe lines or links between these equipment items, and generate an HMI application for visualizing the process carried out by the automation system based on results of this analysis. In one or more embodiments, after identifying the items of equipment represented in the P&ID drawings, the development system can allow the user to select equipment of interest to be included on an HMI display being developed. The system can then identify lines (e.g., piping) between the selected items of equipment, and generate an HMI interface display comprising graphical objects representing the selected equipment and the lines between the equipment. As part of this translation, the development system can redraw the lines between the items of equipment to simplify the connections relative to their original representations on the P&ID drawings.

In some embodiments, the development system can also leverage the information extracted from the P&ID drawings to generate recommendations for interlocks that may be merited based on the sets of equipment and associated connections represented in the P&ID drawings. In this way, the system serves as a design check to ensure sure that necessary interlock programming is not overlooked.

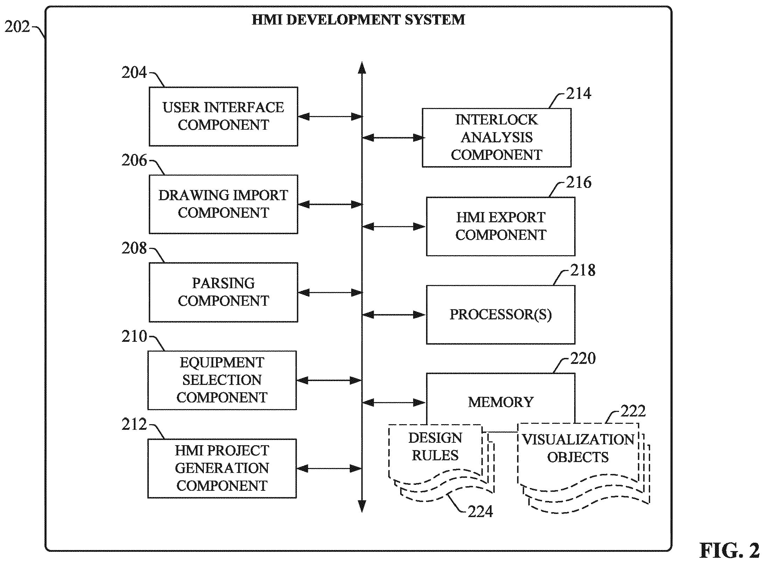

FIG. 2 is a block diagram of an example HMI development system 202 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

HMI development system 202 can include a user interface component 204, a drawing import component 206, a parsing component 208, an equipment selection component 210, an HMI project generation component 212, an interlock analysis component 214, an HMI export component 216, one or more processors 218, and memory 220. In various embodiments, one or more of the interface component 204, drawing import component 206, parsing component 208, equipment selection component 210, HMI project generation component 212, interlock analysis component 214, HMI export component 216, the one or more processors 218, and memory 220 can be electrically and/or communicatively coupled to one another to perform one or more of the functions of the HMI development system 202. In some embodiments, components 204, 206, 208, 210, 212, 214, and 216 can comprise software instructions stored on memory 220 and executed by processor(s) 218. HMI development system 202 may also interact with other hardware and/or software components not depicted in FIG. 2. For example, processor(s) 218 may interact with one or more external user interface devices, such as a keyboard, a mouse, a display monitor, a touchscreen, a smart phone, a tablet computer, an AR/VR wearable appliance, or other such interface devices.

User interface component 204 can be configured to receive user input and to render output to a user in any suitable format (e.g., visual, audio, tactile, etc.). In some embodiments, user interface component 204 can render interactive interface displays on a display device (e.g., a display device associated with a desktop computer, a laptop computer, a tablet computer, a smart phone, etc.), where the interface displays serve as the interface for an industrial HMI development platform (or a platform for developing other types of industrial visualizations, including but not limited to virtual reality visualizations). In some embodiments, the user interface component 204 can render selectable design tools and receive visualization development input via interaction with the tools. Such visualization development input can include, for example, selection and placement of animated graphical objects within a visualization interface for an automation system, links to data sources (e.g., data tags of a control program) whose data values will animate the graphical objects, etc.

Drawing import component 206 can be configured to import a digital P&ID drawing or model into the system 202. The drawing can be imported in any suitable format, including but not limited to a PDF file, an image file, an optical scan of a hard-copy print-out, or another drawing format. Parsing component 208 can be configured to analyze the imported P&ID drawing and identify items of equipment and connections (e.g., pipes) between this equipment represented in the drawing. Equipment selection component 210 can be configured to select one or more of the discovered items of equipment in accordance with user selection input. Equipment selection component 210 can also be configured to identify connections or links between the selected items of equipment.

HMI project generation component 212 can be configured to generate, based on the selected equipment and connections therebetween, at least portions of an HMI application defining one or more graphical interface displays or screens for visualizing the industrial system or process represented by the P&ID drawings. In some embodiments, HMI project generation component 212 can match items of equipment identified in the P&ID drawing with corresponding visualization objects 222 stored in a graphical object library and include these matching visualization objects 222 in the HMI application. HMI project generation component 212 can also redraw the connections between the graphical representations of the selected equipment in order to simplify the lines between the equipment graphics relative to the original routing depicted in the P&ID drawing. The resulting HMI application can be executed on an HMI terminal or other type of computing device to render the graphical interface displays and populate or animate these displays with real-time data from the controlled industrial process.

Interlock analysis component 214 can be configured to identify whether combinations of equipment (e.g., tanks, pumps, sensors, mixers, etc.) identified in the P&ID drawing should be associated with one or more programmed interlocks and, if these interlocks are not part of the current design, generate recommendations to add control programming to implement the interlocks. In some embodiments, determinations as to whether one or more interlocks are warranted for a given set of equipment can be based on predefined design rules 224 stored on the memory 220.

HMI export component 216 can be configured to export or download the resulting visualization application created by the HMI project generation component 212. For example, HMI export component 216 can download the resulting visualization application to a target HMI terminal, virtual reality (VR) or augmented reality (AR) server, or other visualization device for execution.

The one or more processors 218 can perform one or more of the functions described herein with reference to the systems and/or methods disclosed. Memory 220 can be a computer-readable storage medium storing computer-executable instructions and/or information for performing the functions described herein with reference to the systems and/or methods disclosed.

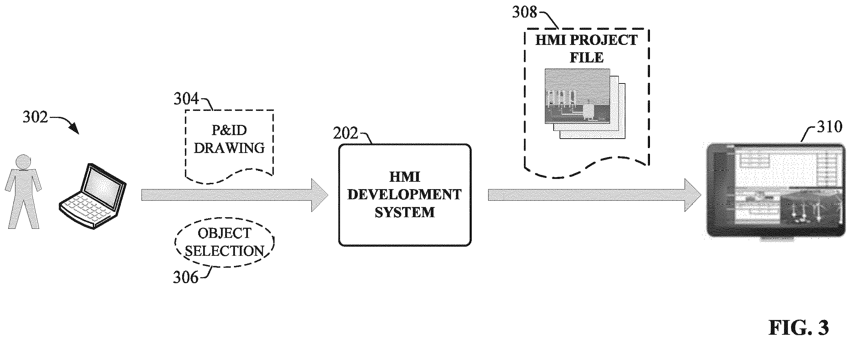

FIG. 3 is a diagram illustrating translation of a P&ID drawing 304 into an HMI application by an HMI development system 202 according to one or more embodiments. Although examples described herein consider embodiments in which the HMI development system 202 outputs an HMI project file 308 for execution on an HMI terminal device 310, other types of industrial visualization applications can also be generated by various embodiments of HMI development system 202. For example, some embodiments of HMI development system 202 can generate an industrial VR model capable of rendering a virtual reality representation of the automation system on a wearable appliance, or an industrial AR application capable of rendering suitable data overlays within a user's field of view via a wearable appliance as the user is viewing the physical automation system.

HMI development system 202 can be used by a system designer to develop a visualization application for rendering graphical interfaces that allow operators to view telemetry and status data associated with the automation system represented by the P&ID drawings 304. The visualization application can also allow operators to control some aspects of system operation by issuing commands to the automation system (e.g., start or stop commands, setpoint modifications, alarm acknowledgements, etc.). In some implementations, the HMI development system can execute on a client device 302, such as a laptop computer, a desktop computer, a tablet computer, or another type of client device. Alternatively, the HMI development system 202 can execute on a cloud platform as a cloud-based service in some implementations. If the system 202 resides on a cloud platform, system designers with authorization to access the HMI development services can remotely access the HMI development system via client device 302 to submit P&ID drawings 304, select equipment for inclusion in the HMI, and deploy HMI project files 308 via the cloud platform.

In the illustrated example, P&ID drawings 304 in the form of CAD files 2106 are provided to the HMI development system 202. The P&ID drawings can be submitted in any suitable format in various embodiments, including but not limited to CAD files, PDF files, image files obtained by optically scanning a physical print-out of the P&ID drawings, or other such formats. As will be described in more detail below, based on recognition of equipment (e.g., tanks, pumps, piping, digital and analog sensors, compressors, etc.) illustrated in the drawings, as well as user selection of a subset of this equipment to be included in the HMI, HMI development system 202 can design one or more suitable operator interface displays comprising graphical and/or alphanumeric objects capable of rendering status and telemetry information for the automation system or process represented by the P&ID drawings 304. The system 202 can then package these interface displays as an HMI project file 308 capable of execution on an HMI terminal device 310 or other type of visualization device.

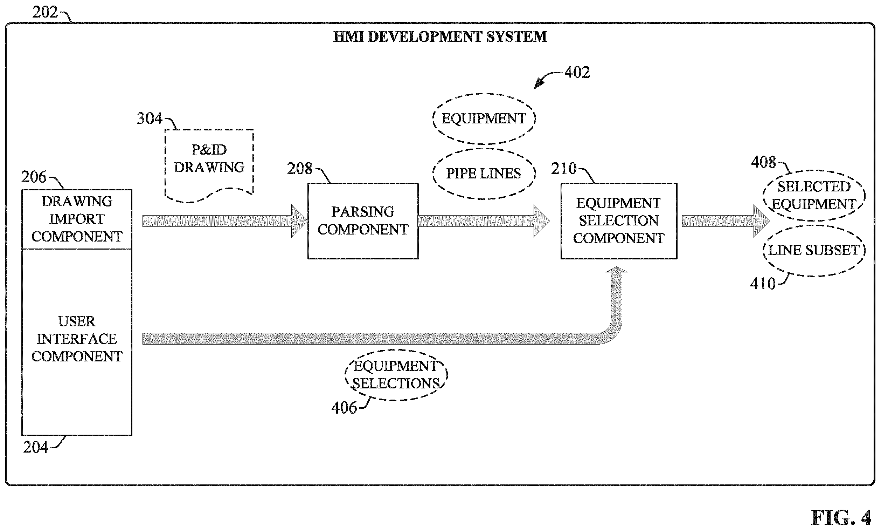

FIG. 4 is a diagram illustrating example data flows for importing a P&ID drawing and selecting equipment for inclusion in an HMI application according to one or more embodiments. As noted above, drawing import component 206 can import a P&ID drawing 304 for processing by the HMI development system 202. In an example scenario, P&ID drawing 304 may be developed using a separate engineering drawing application, and a system designer can import the P&ID drawing 304 into the HMI development system 202 using interactive import tools provided by the user interface component 204. For example, user interface component 204 can generate and render, on client device 302, an interface display including an import tool that allows the user to select a P&ID drawing to be imported and to initiate the import. Alternatively, HMI development system 202 may be a subsystem of a comprehensive design platform that supports parallel development of engineering drawings and control programming within the same development environment. In such embodiments, the P&ID drawing 304 can be shared between the drawing development platform and the program development system within the same development environment.

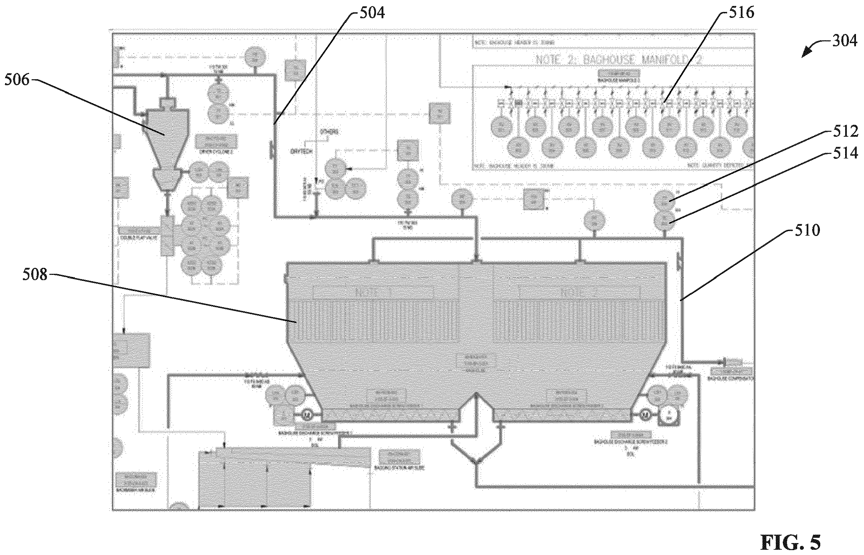

FIG. 5 is an example P&ID drawing 304 that can be imported into the HMI development system 202 and used as the basis for a new HMI application. This example P&ID drawing 304 depicts various types of equipment that make up an industrial system, including tanks 506 and 508 to which a number inlet and outlet pipes are connected, including pipe lines 504 and 510. P&ID drawing 304 also depicts a number of meters 512 of different types (e.g., temperature transmitters, pressure transmitters, level gauges, etc.), control devices 514 (e.g., temperature controllers, pressure controllers, etc.), valves 516, pumps, and other such equipment.

Once the P&ID drawing 304 has been imported, parsing component 208 can analyze the P&ID drawing 304 to identify items of equipment represented in the drawings 304, as well as connections or links between the items of equipment. Parsing component 208 can employ any suitable method for delineating items of equipment and pipes represented in the P&ID drawing 304, including but not limited to edge or contour detection, shape recognition, or other techniques. In some embodiments, a library of known P&ID elements - e.g., shapes or text that are known to represent specific items of equipment - can be stored on memory 220, and parsing component 208 can identify items of equipment depicted in the drawing 304 by cross-referencing shapes or text identified in the drawing 304 with records of known elements defined in this library. Returning to FIG. 4, upon completion of this analysis, parsing component 208 can output equipment identification data 402 that itemizes the equipment and pipe lines discovered in the submitted P&ID drawing 304. This equipment identification data 402 is provided to the equipment selection component 210, and the equipment selection process can then begin.

After the drawing 304 has been imported into the system 202 and the equipment and pipe lines have been identified by the parsing component 208, user interface component 204 can render a depiction of the P&ID drawing 304 on the client device to allow the user to select one or more of the identified items of equipment to be included in the HMI being developed. In some scenarios, the user may decide to select a subset of the identified equipment that will be of interest to the operators who will be managing daily operation of the automation system. With reference to FIG. 4, while the P&ID drawing 304 is rendered on the client device, the user can submit equipment selection data 406 identifying which items of equipment extracted from the P&ID drawing 304 are to be included in the HMI being developed. This equipment selection data 406 can be submitted via interaction with the rendered P&ID drawing 304, e.g., by selecting the desired equipment items from the display.

Returning again to FIG. 5, the user can select items of equipment by clicking, touching, or otherwise selecting items of equipment from the rendering of the P&ID drawing 304. In response to selection of an equipment item - e.g., tank 508 - from the P&ID drawing 304, the user interface component 204 can add a colored highlight effect on the border of the selected item, indicating that the equipment item has been selected. In the example depicted in FIG. 5, tanks 506 and 508 have been selected by the user for inclusion in the HMI. As the user selects equipment from the P&ID drawing 304, the equipment selection component 210 updates selected equipment data 408 (see FIG. 4), which identifies the items that have been selected by the user. The user may also unselect equipment items, if desired, via suitable interaction with the rendered P&ID drawing 304.

In response to selection of an item of equipment from the P&ID drawing 304, the equipment selection component 210 also identifies any pipe lines (e.g., pipe lines 504 and 510) that are attached to the selected equipment, and updates line subset data 410 identifying these connected pipe lines 510. As shown in FIG. 5, pipe lines (e.g., pipe lines 504 and 510) that are identified as being connected to selected items of equipment (e.g., tanks 506 and 508) are highlighted by the user interface component 204. In some embodiments, the user interface component 204 can use highlights of different colors to more easily distinguish between selected items of equipment and pipe lines that are connected to the selected equipment. Also, some embodiments of the user interface component 204 can further distinguish between pipe lines that intersect with only one item of selected equipment and pipe lines that connect two or more items of selected equipment. For example, if tanks 506 and 508 are selected by the user, user interface component 204 can highlight these selected items in a first color (e.g., dark blue). Pipe line 510, and any other pipe line that is connected only to tank 508 but not to tank 506, can be highlighted in a second color (e.g., purple), while pipe line 504, which connects tank 506 to tank 508, can be highlighted in a third color (e.g., turquoise).

Equipment selection component 210 can use any suitable analysis technique to identify pipe lines 510 that are connected to selected items of equipment. For example, equipment selection component 210 can use a computational geometry algorithm that finds intersections between a selected item of equipment (e.g., tank 506 or 508) and one or more pipe lines 510. Each time the user selects another item of equipment, equipment selection component 210 updates both the selected equipment data 408 to record the selected item, as well as the line subset data 410 to record any previously unrecorded pipe lines 510 that are connected to the selected item of equipment.

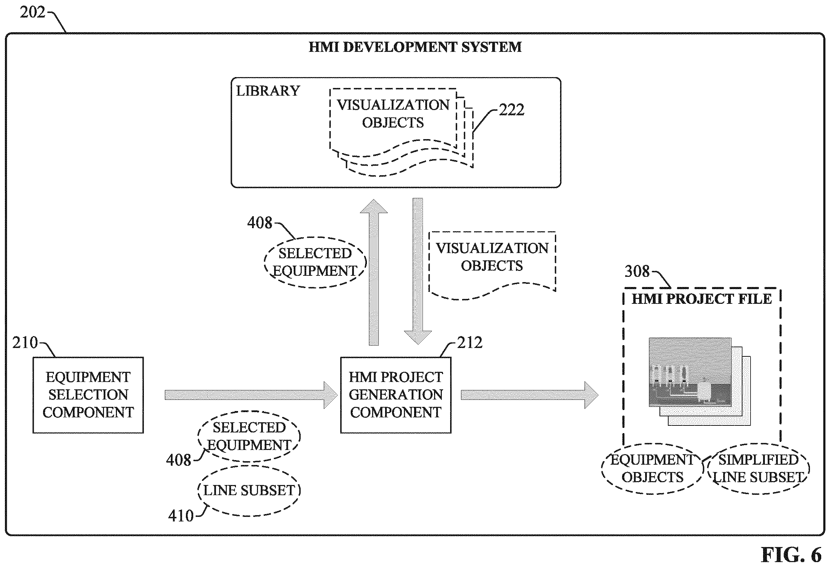

Once all items of equipment that the user wishes to be included in the HMI have been selected, the user can initiate generation of an HMI project file 308 based on the selections; e.g., by selecting an HMI export control on the development interface. FIG. 6 is a diagram illustrating generation of an HMI project file 308 by the HMI development system 202. When the user initiates project generation, equipment selection component 210 sends the selected equipment data 408 and the line subset data 410 to the HMI project generation component 212, which generates an HMI project file 308 based on this information. In general, HMI project generation component 212 creates an HMI project file 308 that defines one or more HMI displays or screens for visualizing operational and status information for the automation system or process represented by the P&ID drawings. These display screens can include animated graphical objects representing devices and equipment of the automation system, as well as associated alphanumeric information indicating status or metric data for the system (e.g., temperatures, flows, pressures, fill levels etc.). HMI project file 308 also defines, for respective graphical objects or alphanumeric display items, links to data sources (e.g., data tags of an industrial control program that monitors and controls the automation system) that animate the respective objects or that determine the displayed values of the alphanumeric data items.

At least one of the interface displays defined in the HMI project file 308 comprises a simplified animated rendering of the P&ID drawing 304 comprising the equipment items selected by the user (as recorded in selected equipment data 408) and the pipe lines that were identified by the equipment selection component 210 as being connected to these selected items of equipment (as recorded in line subset data 410). HMI project generation component 212 omits from the HMI project file 308 any items of equipment from the P&ID drawing 304 that were not selected by the user. In this way, the HMI development system 202 allows the user to easily set the degree of complexity or simplicity of the resulting HMI display interface by including only those items of equipment that the system designer considers to be of interest to operators during operation of the automation system.

In some embodiments, HMI project generation component 212 can obtain suitable graphical objects corresponding to the selected items of equipment from a library of predefined visualization objects 222 stored in memory 220, and integrate these selected visualization objects 222 into the HMI project file 308. For example, upon receipt of the selected equipment data 408 identifying the items of equipment selected by the user, the HMI project generation component 212 can determine whether pre-defined visualization objects 222 are available for any of the selected items of equipment, and integrate these visualization objects 222 into the HMI display interface. Each visualization object 222 can include animation definitions that control the animation behavior or visual state of the object 222 during runtime as a function of the value of the data source to which the object 222 is linked. This animation behavior can include, for example, setting the color, position, orientation, or another appearance attribute of the object 222 based on a current state of the corresponding piece of equipment. HMI project generation component 212 can arrange these selected visualization objects 222 relative to one another on the HMI interface displays based on the relative positions and orientations of their corresponding items of equipment on the original P&ID drawing 304, such that the relative positioning between the visualization objects 222 substantially mirrors that of the P&ID drawings 304.

In some embodiments, when a pre-defined visualization object 222 has been added to the HMI project file 308, the HMI project generation component 212 can identify the appropriate animation data source for the visualization object 222 and link the the animation properties of the object to the data source. The animation data source can be, for example, a data tag of an industrial control program representing a value or state of the corresponding item of equipment that drives the animation state of the object 222. In an example embodiment, HMI project generation component 212 can infer the controller data tag to be linked to the visualization object 222 for a given item of equipment based on information about the equipment extracted from the P&ID drawing 304. For example, if a visualization object 222 added to the HMI project file 308 represents a particular tank selected from the P&ID drawing 304, the object 222 may include a fill level animation property that is to be linked to the controller data tags containing the metered fill level of the tank. During initial analysis, the parsing component 208 may have extracted, from the P&ID drawings 304, a name or other identifier for the tank, and this tank name can be recorded as the tank identifier in the selected equipment data 408. Using this tank name, the HMI project generation component 212 can access a controller tag database associated with the industrial control program that will be monitoring and controller the automation system, retrieve the tag identifier or address for the tank's fill level value, and link the fill animation property for the visualization object 222 to this tag identifier. Alternatively, rather than allowing the HMI development system 202 to automatically infer and set the animation links for the visualization objects 222, the system 202 can allow the user to manually set the animation links for respective objects 222.

Although the example depicted in FIG. 6 assumes that the HMI development system 202 selects and integrates visualization objects 222 from a library of predefined objects 222, in some embodiments the HMI project generation component 212 may alternatively generate a new graphical object 222 for a given item of equipment based on shape information for the equipment item obtained from the P&ID drawing 304.

In addition to placing and positioning the visualization objects 222 (or equipment objects) representing selected equipment into the HMI interface display being developed, the HMI project generation component 212 also draws the pipe lines between the equipment objects based on the line subset data 410. In general, since the HMI interface display is designed to quickly convey status and operational information for the industrial process during runtime, and is not necessarily intended to convey detailed engineering information, the routing of pipe lines depicted on the HMI interface display need not accurately mirror the routing depicted in the P&ID drawing. Instead, simplifying the pipe line paths between the visualization objects 222 may result in removal of unnecessary or superfluous pipe lines, yielding a less cluttered HMI interface than would be the case if the routing illustrated in the P&ID drawing 304 were copied verbatim into the HMI interface display.

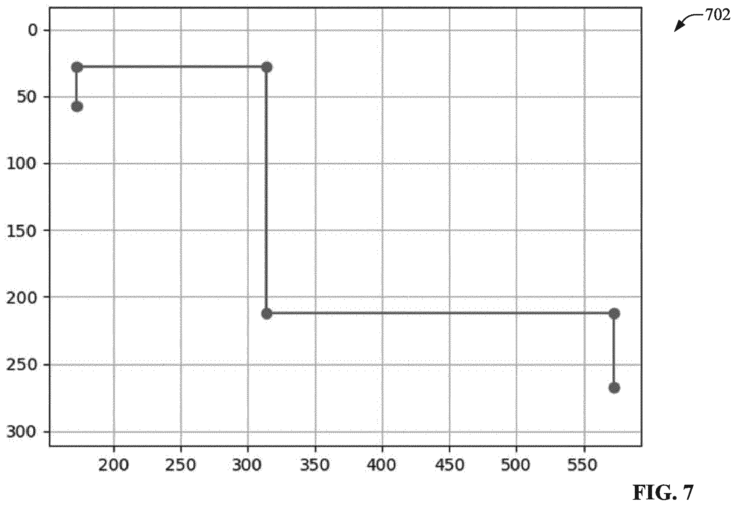

Accordingly, for each pipe line defined in the line subset data 410, HMI project generation component 212 can simplify the line's contour to yield a simplified path that connects the selected items of equipment using a shortest path algorithm, and draw the resulting simplified pipe line path on the HMI interface display being developed. For example, FIG. 7 is a graph 702 depicting a simplified pipe line path for the extracted pipe line 504 that connects tank 506 to tank 508. In this example, any pipe sections that branch from pipe line 504 and are not part of the path between tank 506 and 508 are omitted from the simplified path line.

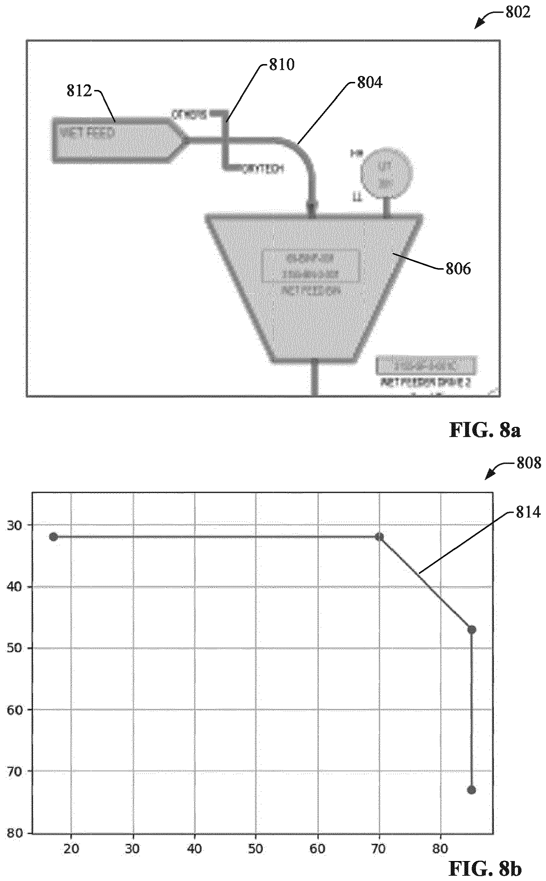

FIGs. 8a and 8b illustrate another example line simplification in which a curved pipe line 804 that connects a feeder 812 to a tank 806, as shown in the P&ID drawing segment 802, is redraw as the simplified line depicted in graph 808 of FIG. 8b. In this example, intersecting pipe line 810, which intersects pipe line 804, is omitted from the simplified line, since this intersecting pipe 810 is not part of the path from the feeder 812 to the tank 806. Moreover, the simplified line replaces the arc of the original pipe line 804 with a straight diagonal line segment 812 in accordance with a shortest path algorithm, which determines a shortest path between the two selected items of equipment 812 and 806 while still maintaining the general contour of the pipe line (e.g., by retaining the vertical and horizontal segments of the path while shortening the arched portion of the path).

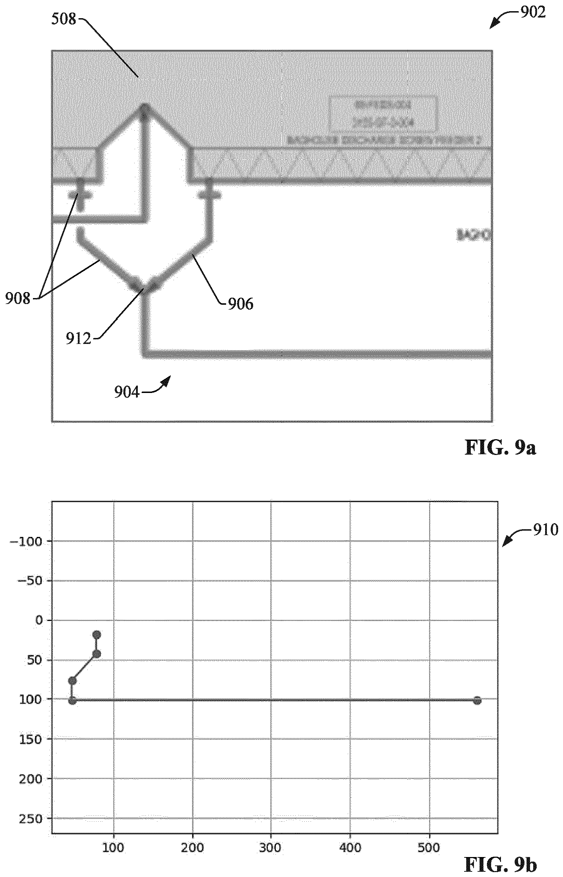

FIGs. 9a and 9b illustrate another example line simplification in which a section of pipe line 904 having a diagonal segment is extracted and simplified by the HMI project generation component 212. As shown in the P&ID drawing segment 902, pipe line 904 includes a branching point 912 at which the pipe line 904 divides into two branching segments 908 and 906, each including a diagonal section. In this example, the HMI project generation component 212 only maintains the right-side branching segment 906 for the HMI and omits the left-side branching segment 908, since only one connecting line from the tank 508 to the next selected piece of equipment is necessary for understanding the process from an operator's perspective. Graph 910 illustrates the resulting simplified line drawn by the HMI project generation component 212. Depending on the arrangement of visualization objects representing the selected equipment, the HMI project generation component 212 may shorten some segments of the redrawn line relative to the original pipe line paths in order to reduce the total path length between two selected pieces of equipment.

By detecting pipe line connections between pieces of equipment selected by the designer from the P&ID drawing, redrawing these pipe line connections in a simplified manner to reduce the distance of the pipe line path, and omitting any superfluous pipe lines connected to the equipment or redundant paths between two pieces of equipment, the HMI development system 202 yields an HMI interface display that renders the automation system in a simplified and decluttered manner.

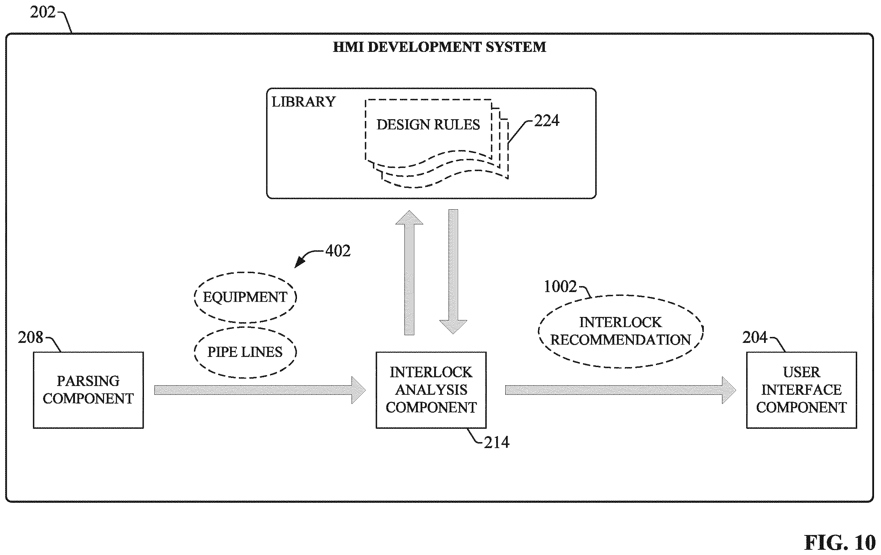

As described above, the processing carried out by the HMI development system 202 for translating a P&ID drawing of an industrial system to a suitable HMI application involves identifying the equipment that makes up the industrial system. In addition to using this information to generate an HMI application capable of visualizing the industrial system, some embodiments of the HMI development system 202 can also use this information to generate recommendations regarding interlocks or permissives that may be beneficially added to the system design. FIG. 10 is a diagram illustrating generation of interlock recommendations based on information extracted from a P&ID drawing and predefined design rules 224. As described above, parsing component 208 analyzes the submitted P&ID drawing 304 to identify pieces of equipment (e.g., tanks, sensors, mixers, etc.) that make up the industrial system or process represented by the drawing 304, and outputs equipment identification data 402 that itemizes the discovered equipment and pipe lines. As described above in connection with FIG. 4, this equipment identification data 402 is provided to the equipment selection component 210 to allow the user to select items of equipment for inclusion in the HMI application for the automation system. Additionally, as illustrated in FIG. 10, this equipment identification data 402 can also be submitted to an interlock analysis component 214, which analyzes the collection of equipment represented by the data 402 in view of predefined design rules 224 to determine whether additional interlocks between equipment could be beneficially added to the control design.

Design rules 224 can be stored on memory 220 and can be written to reflect industry standards. In general, design rules 224 can define recommended control interlocks that may be necessary given a particular set of equipment, either for reasons of safety, to prevent damage to equipment, or to ensure process efficiency. For example, a design rule 224 may specify that a tank having an associated level transmitter and which is fed material by an inlet pump should be associated with a "low tank level" interlock, such that the pump will run if the tank level falls below a defined threshold. If the tank is also attached to an outlet pump, a design rule 224 can also specify that the outlet pump should not be run if the tank level is below this threshold value. Another design rule 224 may also define interlock conditions for combinations of pumps and valves. For example, a design rule 224 for a pump that is connected to a valve may specify that the pump should not be permitted to run unless the valve is in the open state. In general, each design rule 224 corresponds to a particular collection of equipment types and a particular relationship between these equipment types (e.g., a tank associated with a level transmitter and an inlet pump, a pump attached to a valve, etc.), and defines one or more control interlocks that should be programmed for that set of equipment. In some embodiments, the system 202 can also allow a user to write custom design rules 224 that define in-house interlock design standards, which can then be checked against new automation system designs for the purpose of making interlock recommendations.

After the parsing component 208 has analyzed P&ID drawing 304 and generated equipment identification data 402 for the drawing 304, interlock analysis component 214 can examine the items of equipment and their relationships as defined by the data 402 and determine, based on this assessment, whether the automation system includes one or more collections of equipment for which a design rule 224 has been defined. For each collection of equipment having an associated design rule 224, interlock analysis component 214 can reference the design rule 224 to determine the interlock recommended for that collection of equipment, and determine whether the control programming for the automation system includes the recommended interlock. In some embodiments, to determine whether the recommended interlock control programming is included in the system design, interlock analysis component 214 can reference the control tag database associated with the control program being developed, and determine whether the interlock has been programmed for the relevant controller data tags (e.g., the data tag associated with a pump control output). This approach may be used in embodiments in which the HMI development system 202 is a sub-system of a unified development platform in which both the control programming and HMI display interfaces are developed, which allows the interlock analysis component 214 to readily access the control program to determine whether any recommended interlocks are missing from the design.

In response to determining that a recommended interlock for a set of equipment defined by equipment identification data 402 is missing from the control programming, the interlock analysis component 214 can generate an interlock recommendation 1002 and send this recommendation to the user interface component 204, which renders the recommendation on the development interface for the user's consideration. The recommendation 1002 can indicate the items of equipment for which the interlock is recommended and describe the recommended interlock for that set of equipment (e.g., a low tank interlock, a valve open interlock, etc.). The user may then choose to add the interlock to the control design in accordance with the recommendation.

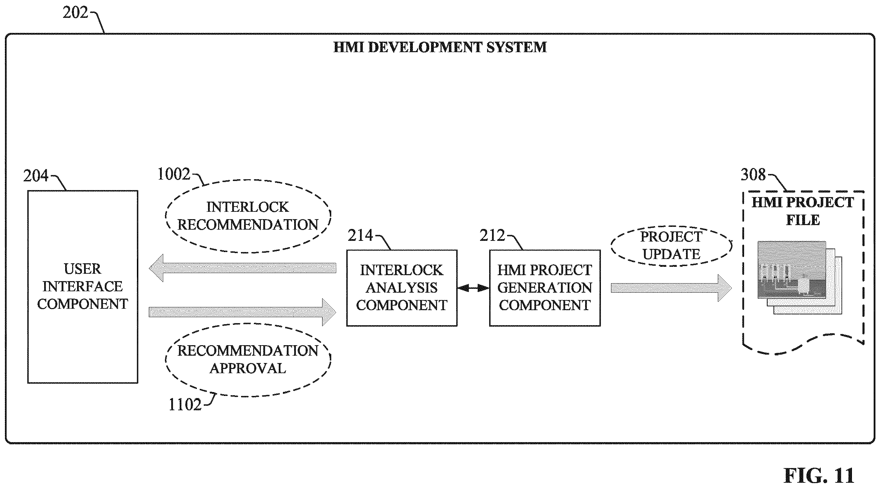

In addition to updating the control program to include the approved interlock programming, it may be beneficial to update the HMI application to reflect the recommended interlock. FIG. 11 is a diagram illustrating an update of the HMI project file 308 to incorporate an approved interlock. In an example scenario, the HMI application may be configured to render alarms or notifications in response to defined operational conditions or statuses of the automation system during runtime, and these alarms or notifications may include interlock status notifications. Accordingly, some embodiments of HMI project generation component 212 can be configured to, in response to receiving an approval 1102 from the user to implement a recommended interlock, update the HMI project file 308 to render status notifications for the interlock. In some HMI applications, these notifications may be rendered on a dedicated interlock status display interface defined by the HMI project file 308, such that the dedicated interface renders the states of any interlock conditions that must be satisfied before a given operation can be performed. In response to the user's approval 1102, the HMI project generation component 212 can update the HMI project file 308 to add these interlock conditions to the display interface as graphical status objects, as well as to set the animation properties of these objects to link the objects to the appropriate controller data tags. In another example HMI application, an alarm screen defined by the HMI project file 308 may be configured to render an alarm if an operation involving an interlocked set of equipment is attempted while the interlock conditions are not satisfied. In this scenario, in response to the user's approval of the recommended interlock, the HMI project generation component 212 can update the HMI project file 308 to add the interlock to the alarm definitions. Other types of HMI project updates to incorporate an approved interlock are also within the scope of one or more embodiments.

The HMI project file 308 can be made editable by the user via the development platform supported by the HMI development system 202. To this end, HMI development tools provided by user interface component 204 can allow a system designer to modify or expand HMI interface displays that have been at least partially generated by HMI project generation component 212 before being compiled and downloaded to an HMI terminal device for runtime execution. Such modifications can include, for example, relocation of graphical elements on an interface display, addition or removal of graphical elements, modification of an animation link to a different data source (e.g., a different controller data tag), modification of an animation property of a selected graphic (e.g., changing a color of a color-change animation, changing a maximum and minimum range of a fill animation, etc.), or other such modifications.

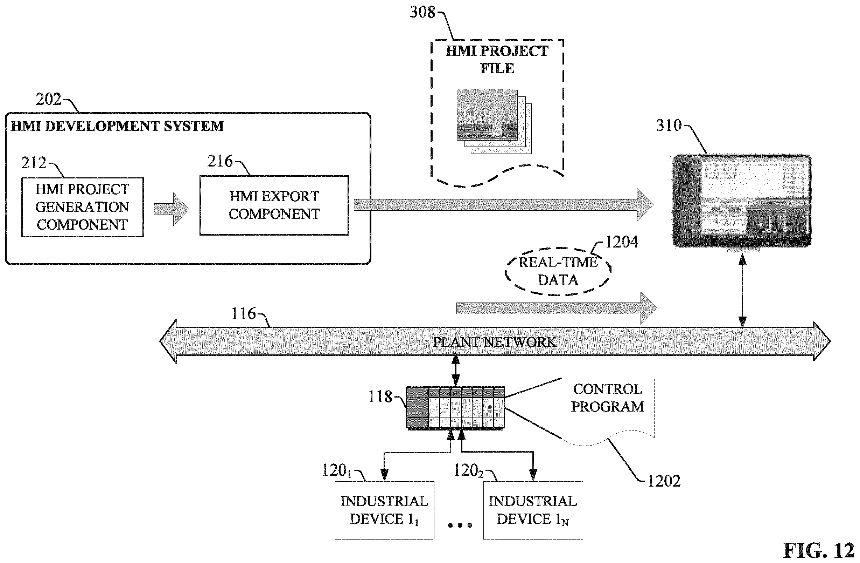

Once development of the HMI project file 308 is complete, the file 308 can be exported to and executed on an HMI terminal device or another type of industrial visualization system. FIG. 12 is a diagram illustrating export of the resulting HMI project file 308 to an HMI terminal device 310. HMI project file 308 defines the interface displays or screens generated by the HMI development system 202 in a format that can be executed on an HMI terminal device 310 to facilitate rendering runtime versions of the interface displays. In various example scenarios, HMI development system 202 may interface with the HMI terminal device 310 via a direct communicative connection between the system 202 and the device 310, or via one or more networks (e.g., a plant network 116). In embodiments in which HMI development system 202 executes on a cloud platform as a cloud-based service, the HMI export component 216 may export the HMI project file 308 via a secured public or private network accessible to the cloud platform and the HMI terminal device 310. Once the HMI project file 308 is created, HMI export component 216 can export or download the HMI project file 308 to a target HMI terminal device 310 or other type of visualization device for storage and execution. In another example scenario, the HMI project file 308 can be copied to a portable memory interface (e.g., a universal serial bus (USB) memory stick), and the file 308 can be copied from this memory interface to the HMI terminal device 310.

Once the HMI project file 308 has been installed, the HMI terminal device 310 can execute a runtime version of the interface displays generated by the HMI development system 202. Typically, the HMI terminal device 310 will be communicatively connected to one or more industrial controllers 118 or other industrial devices that serve as sources of real-time data 1204 read by the HMI terminal device 310 in accordance with the data links defined by the HMI project file 308. In the illustrated example, HMI terminal device 310 exchanges data with industrial controller 118 via plant network 116. Industrial controller 118 executes a control program 1202 to facilitate monitoring and control of a set of industrial devices 120 that make up the automation system represented by the P&ID drawings 304. Data tags defined on the industrial controller 118 serve as sources of analog and digital data values read by the HMI terminal device 310 and used to animate the graphical objects (e.g., visualization objects 222) rendered on the interface displays of the HMI project file 308. As described above, at least some of the data tags selected as data sources for respective graphical elements on the HMI interface displays are set by the HMI development system 202 based on analysis of the P&ID drawings 304.

The approach utilized by the HMI development system 202 to create HMI interface displays can reduce or eliminate the amount of manual HMI development that must be performed by a controls engineer by populating an HMI interface display with appropriate animated graphics representing selected items of equipment and automatically drawing pipe lines between the equipment based on analysis of a P&ID drawing of the industrial system or process. The HMI development system 202 can arrange this equipment and draw the connecting pipe lines in a simplified manner relative to the P&ID representations to yield a less cluttered operator interface that can be readily interpreted by a system operator.

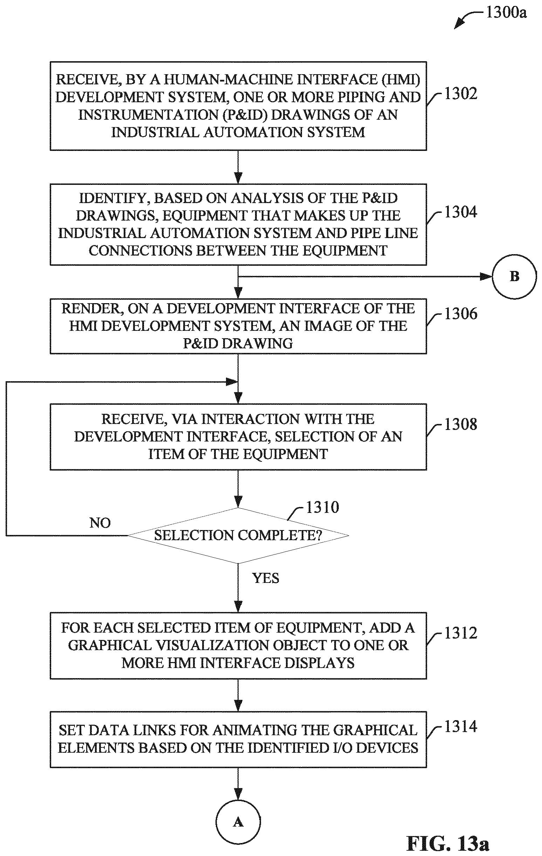

FIGs. 13a-13d illustrate a methodology in accordance with one or more embodiments of the subject application. While, for purposes of simplicity of explanation, the methodology shown herein is shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 13a illustrates a first part of an example methodology 1300a for generating an HMI application for monitoring and controlling an industrial automation system or process. Initially, at 1302, one or more piping and instrumentation (P&ID) drawings of an industrial automation system are received by a human-machine interface (HMI) development system. The P&ID drawings can be received in any suitable digital format, including but not limited to PDF, optical scan, image data, or another format. At 1304, equipment that makes up the industrial automation system is identified based on analysis of the P&ID drawings. Additionally, pipe line connections between the identified equipment are also identified based on the analysis. Any suitable technique can be used to delineate and identify the items of equipment and pipe line connections represented in the P&ID drawing, including but not limited to edge or contour detection, shape recognition, or other techniques. In some embodiments, a library of known P&ID elements can be stored in a library associated with the HMI development system, and the system can identify items of equipment depicted in the drawing by cross-referencing shapes or text identified in the drawing with records of known elements defined in this library.

At 1306, an image of the P&ID drawing is rendered on a development interface of the HMI development system. At 1308, selection of an item of the equipment that is to be included in an HMI application for the automation system is received via interaction with the development interface (e.g., by clicking on, touching, or otherwise selecting a representation of the item of equipment on the rendered image of the drawing). At 1310, a determination is made as to whether selection of equipment to be included on the HMI application is complete. This determination can be made, for example, when the user selects a control on the development interface indicating that selection of equipment is complete. If selection is not complete (NO at step 1310), the methodology returns to step 1308, where selection of another item of equipment is received. Steps 1308-1310 are repeated until the user has selected all equipment items of interest. When selection of equipment for inclusion in the HMI application is complete (YES ate step 1310), the methodology proceeds to step 1312, where, for each item of equipment selected at step 1308, a graphical visualization object is added to one or more HMI interface displays being developed for the HMI application.

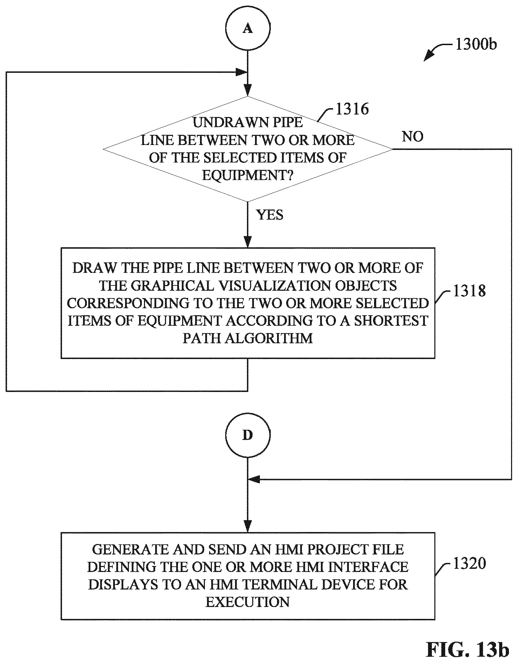

The methodology then continues with the second part 1300b illustrated in FIG. 13b. At 1316, a determination is made as to whether pipe lines between two or more of the equipment selected at step 1308 have not yet been drawn on the HMI interface display. If there are remaining undrawn pipe lines (YES at step 1316), the methodology proceeds to step 1318, where the pipe line is drawn on HMI interface display between two or more of the graphical visualization objects corresponding to the two or more selected items of equipment according to a shortest path algorithm. This line drawing process can also identify any superfluous or redundant lines that intersect with the main pipe line between the two sets of equipment and omit these unnecessary lines from the HMI rendering. The methodology then returns to step 1316, and steps 1316-1318 repeat until there are no remaining undrawn pipe lines between the selected items of equipment (NO at step 1316), and the methodology then proceeds to step 1320. At 1320, an HMI project file defining the resulting one or more HMI interface displays is generated by the HMI development system and sent to an HMI terminal device for execution.

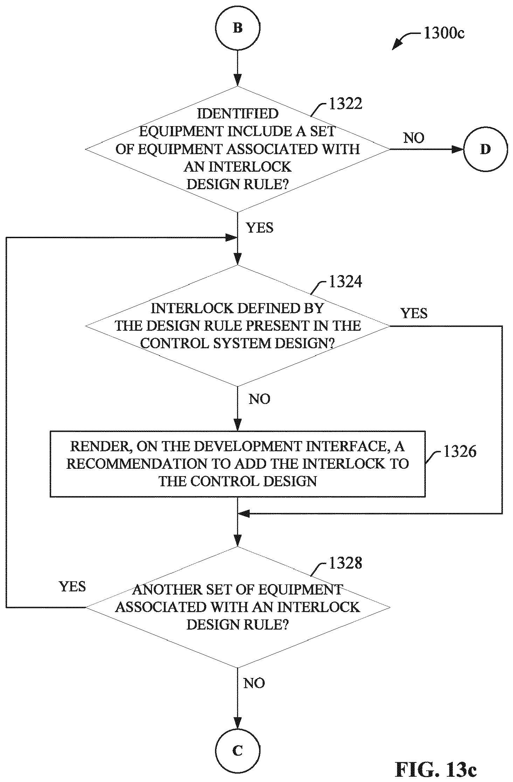

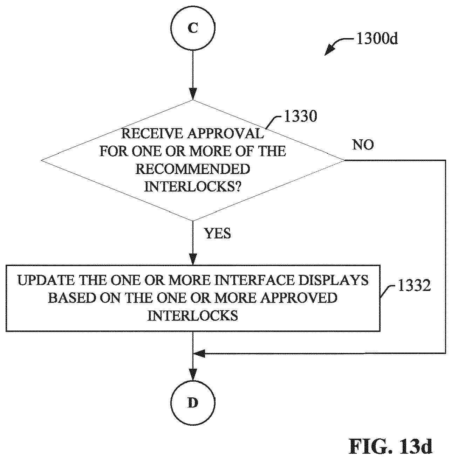

After the equipment that makes up the automation system and their pipe line connections have been identified at step 1304, the methodology also initiates a separate process that begins with the third part of the methodology 1300c illustrated in FIG. 13c. At 1322, a determination is made as to whether the equipment identified at step 1304 includes a set of equipment associated with an interlock design rule. If no sets of equipment among the selected equipment items are associated with an interlock design rule (NO at step 1322), the methodology proceeds to step 1320, where the HMI project file is generated without further modifications. Alternatively, if the selected equipment includes a set of equipment associated with an interlock design rule (YES at step 1322), the methodology proceeds to step 1324, where a determination is made as to whether an interlock defined by the design rule is present in the control system design for the automation system. This determination can be made, for example, by referencing the control program for the automation system to determine whether the conditions defined by the interlock have been programmed. If the defined interlock is not present in the control system design (NO at step 1324), the methodology proceeds to step 1326, where a recommendation to add the interlock to the control design is rendered on the HMI development interface. This notifies the system designer of the missing interlock and affords the designer an opportunity to add the interlock to the control program. After the rendering, or if the recommended interlock is already present in the control system design (YES at step 1324), the methodology proceeds to step 1328, where a determination is made as to whether another set of equipment among the selected equipment items is associated with an interlock design rule. If so (YES at step 1328), the methodology returns to step 1324, and steps 1324-1328 are repeated until there are no remaining unexamined sets of equipment that are associated with an interlock design rule. When all sets of equipment associated with interlock design rules have been examined (NO at step 1328), the methodology proceeds to the fourth part 1300d illustrated in FIG. 13d.

At 1330, a determination is made as to whether approval for one or more of the recommended interlocks rendered at step 1326 is received. If approval for one or more of the recommended interlocks is received (YES at step 1330), the methodology proceeds to step 1332, where the one or more interface displays are updated based on the one or more approved interlocks. This update may comprise, for example, adding the approved interlocks to an interlock status display screen. After this updated is performed, or if the system designer does not approve any of the recommended interlocks (NO at step 1330), the methodology proceeds to step 1320, where the HMI project file is generated in accordance with the updates as well as the equipment visualization objects and pipe line drawings.

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers for mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and EtherNet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

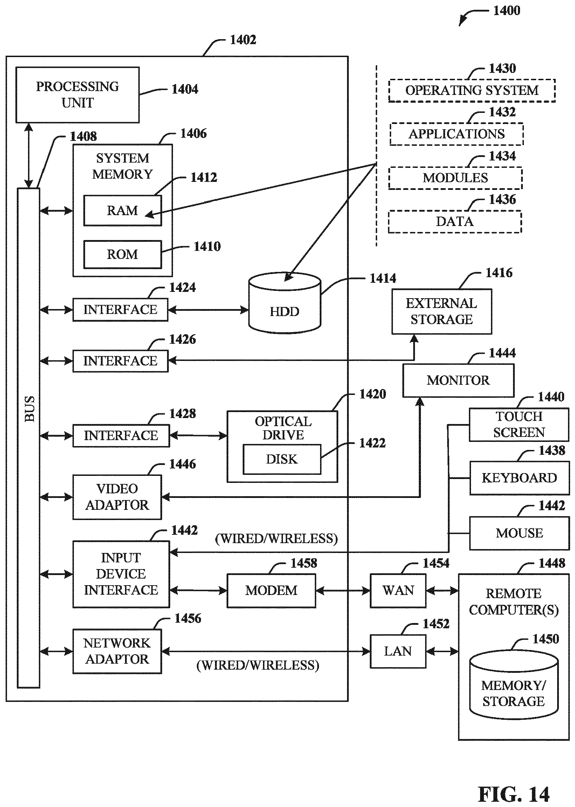

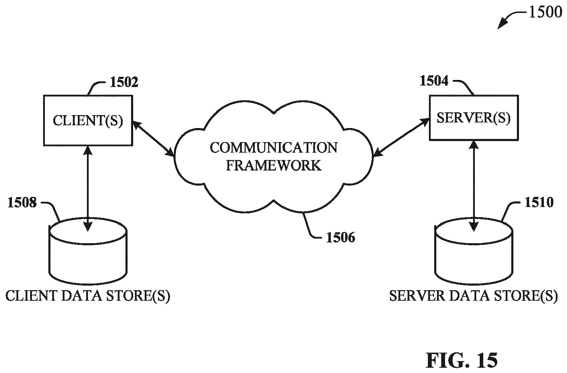

In order to provide a context for the various aspects of the disclosed subject matter, FIGs. 14 and 15 as well as the following discussion are intended to provide a brief, general description of a suitable environment in which the various aspects of the disclosed subject matter may be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 14, the example environment 1400 for implementing various embodiments of the aspects described herein includes a computer 1402, the computer 1402 including a processing unit 1404, a system memory 1406 and a system bus 1408. The system bus 1408 couples system components including, but not limited to, the system memory 1406 to the processing unit 1404. The processing unit 1404 can be any of various commercially available processors. Dual microprocessors and other multi-processor architectures can also be employed as the processing unit 1404.

The system bus 1408 can be any of several types of bus structure that can further interconnect to a memory bus (with or without a memory controller), a peripheral bus, and a local bus using any of a variety of commercially available bus architectures. The system memory 1406 includes ROM 1410 and RAM 1412. A basic input/output system (BIOS) can be stored in a non-volatile memory such as ROM, erasable programmable read only memory (EPROM), EEPROM, which BIOS contains the basic routines that help to transfer information between elements within the computer 1402, such as during startup. The RAM 1412 can also include a highspeed RAM such as static RAM for caching data.

The computer 1402 further includes an internal hard disk drive (HDD) 1414 (e.g., EIDE, SATA), one or more external storage devices 1416 (e.g., a magnetic floppy disk drive (FDD) 1416, a memory stick or flash drive reader, a memory card reader, etc.) and an optical disk drive 1420 (e.g., which can read or write from a CD-ROM disc, a DVD, a BD, etc.). While the internal HDD 1414 is illustrated as located within the computer 1402, the internal HDD 1414 can also be configured for external use in a suitable chassis (not shown). Additionally, while not shown in environment 1400, a solid state drive (SSD) could be used in addition to, or in place of, an HDD 1414. The HDD 1414, external storage device(s) 1416 and optical disk drive 1420 can be connected to the system bus 1408 by an HDD interface 1424, an external storage interface 1426 and an optical drive interface 1428, respectively. The interface 1424 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1402, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1412, including an operating system 1430, one or more application programs 1432, other program modules 1434 and program data 1436. All or portions of the operating system, applications, modules, and/or data can also be cached in the RAM 1412. The systems and methods described herein can be implemented utilizing various commercially available operating systems or combinations of operating systems.

Computer 1402 can optionally comprise emulation technologies. For example, a hypervisor (not shown) or other intermediary can emulate a hardware environment for operating system 1430, and the emulated hardware can optionally be different from the hardware illustrated in FIG. 14. In such an embodiment, operating system 1430 can comprise one virtual machine (VM) of multiple VMs hosted at computer 1402. Furthermore, operating system 1430 can provide runtime environments, such as the Java runtime environment or the .NET framework, for application programs 1432. Runtime environments are consistent execution environments that allow application programs 1432 to run on any operating system that includes the runtime environment. Similarly, operating system 1430 can support containers, and application programs 1432 can be in the form of containers, which are lightweight, standalone, executable packages of software that include, e.g., code, runtime, system tools, system libraries and settings for an application.

Further, computer 1402 can be enable with a security module, such as a trusted processing module (TPM). For instance with a TPM, boot components hash next in time boot components, and wait for a match of results to secured values, before loading a next boot component. This process can take place at any layer in the code execution stack of computer 1402, e.g., applied at the application execution level or at the operating system (OS) kernel level, thereby enabling security at any level of code execution.

A user can enter commands and information into the computer 1402 through one or more wired/wireless input devices, e.g., a keyboard 1438, a touch screen 1440, and a pointing device, such as a mouse 1442. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1404 through an input device interface 1444 that can be coupled to the system bus 1408, but can be connected by other interfaces, such as a parallel port, an IEEE 1394 serial port, a game port, a USB port, an IR interface, a BLUETOOTH^{®} interface, etc.

A monitor 1444 or other type of display device can be also connected to the system bus 1408 via an interface, such as a video adapter 1448. In addition to the monitor 1444, a computer typically includes other peripheral output devices (not shown), such as speakers, printers, etc.

The computer 1402 can operate in a networked environment using logical connections via wired and/or wireless communications to one or more remote computers, such as a remote computer(s) 1448. The remote computer(s) 1448 can be a workstation, a server computer, a router, a personal computer, portable computer, microprocessor-based entertainment appliance, a peer device or other common network node, and typically includes many or all of the elements described relative to the computer 1402, although, for purposes of brevity, only a memory/storage device 1450 is illustrated. The logical connections depicted include wired/wireless connectivity to a local area network (LAN) 1452 and/or larger networks, e.g., a wide area network (WAN) 1454. Such LAN and WAN networking environments are commonplace in offices and companies, and facilitate enterprise-wide computer networks, such as intranets, all of which can connect to a global communications network, e.g., the Internet.

When used in a LAN networking environment, the computer 1402 can be connected to the local network 1452 through a wired and/or wireless communication network interface or adapter 1456. The adapter 1456 can facilitate wired or wireless communication to the LAN 1452, which can also include a wireless access point (AP) disposed thereon for communicating with the adapter 1456 in a wireless mode.

When used in a WAN networking environment, the computer 1402 can include a modem 1458 or can be connected to a communications server on the WAN 1454 via other means for establishing communications over the WAN 1454, such as by way of the Internet. The modem 1458, which can be internal or external and a wired or wireless device, can be connected to the system bus 1408 via the input device interface 1442. In a networked environment, program modules depicted relative to the computer 1402 or portions thereof, can be stored in the remote memory/storage device 1450. It will be appreciated that the network connections shown are example and other means of establishing a communications link between the computers can be used.

When used in either a LAN or WAN networking environment, the computer 1402 can access cloud storage systems or other network-based storage systems in addition to, or in place of, external storage devices 1416 as described above. Generally, a connection between the computer 1402 and a cloud storage system can be established over a LAN 1452 or WAN 1454 e.g., by the adapter 1456 or modem 1458, respectively. Upon connecting the computer 1402 to an associated cloud storage system, the external storage interface 1426 can, with the aid of the adapter 1456 and/or modem 1458, manage storage provided by the cloud storage system as it would other types of external storage. For instance, the external storage interface 1426 can be configured to provide access to cloud storage sources as if those sources were physically connected to the computer 1402.

The computer 1402 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 15 is a schematic block diagram of a sample computing environment 1500 with which the disclosed subject matter can interact. The sample computing environment 1500 includes one or more client(s) 1502. The client(s) 1502 can be hardware and/or software (e.g., threads, processes, computing devices). The sample computing environment 1500 also includes one or more server(s) 1504. The server(s) 1504 can also be hardware and/or software (e.g., threads, processes, computing devices). The servers 1504 can house threads to perform transformations by employing one or more embodiments as described herein, for example. One possible communication between a client 1502 and servers 1504 can be in the form of a data packet adapted to be transmitted between two or more computer processes. The sample computing environment 1500 includes a communication framework 1506 that can be employed to facilitate communications between the client(s) 1502 and the server(s) 1504. The client(s) 1502 are operably connected to one or more client data store(s) 1508 that can be employed to store information local to the client(s) 1502. Similarly, the server(s) 1504 are operably connected to one or more server data store(s) 1510 that can be employed to store information local to the servers 1504.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

## Claims

1. A system, comprising:
a processor (218), operatively coupled to a memory (220), configured to execute executable
components stored on the memory, the executable components comprising:
a drawing import component (206) configured to import a piping and instrumentation diagram, P&ID, drawing (314) representing an automation system to be monitored and controlled by an industrial controller (118);
a parsing component (208) configured to identify (1304), based on analysis of the P&ID drawing, items of equipment (506, 508) that make up the automation system and pipe line connections (504, 510) between the items of equipment;
a user interface component (204) configured to render (1306) the P&ID drawing on a development interface;
an equipment selection component (210) configured to select (1308), as selected equipment, a subset of the items of equipment identified via interaction with the development interface, and to identify a subset of the pipe line connections attached to the selected equipment;
a human-machine interface, HMI, project generation component (212) configured to generate an HMI interface display comprising visualization objects (222) representing the selected equipment and graphical pipe lines representing the subset of the pipe line connections, wherein the HMI interface display is configured to visualize operational or status data generated by the automation system; and **characterized by**
an interlock analysis component configured to, in response to determining that a combination of equipment, of the items of equipment, is associated with a design rule specifying an interlock for the combination of equipment, render, on the development interface, a recommendation to add control programming for the interlock to an industrial control program.

2. The system of claim 1, wherein the HMI project generation component is configured to draw at least one of the graphical pipe lines corresponding to one of the pipe line connections between two of the items of equipment in accordance with a shortest path algorithm.

3. The system of claim 1 or 2, wherein the HMI project generation is configured to identify a pipe line connection, of the subset of the pipe line connections, that is redundant or that connects to only one item of the selected equipment, and to omit the pipe line connection from the HMI interface display; or
wherein the items of equipment comprise at least one of a tank, a mixer, a sensor, a pump, or a valve.

4. The system of one of claims 1 to 3, wherein the HMI project generation component is configured to, for an item of the selected equipment, identify a visualization object, from a library of visualization objects, corresponding to the item of the selected equipment, and add the visualization object to the HMI interface display.

5. The system of one of claims 1 to 4, wherein
the HMI project generation component is further configured to link an animation property of at least one of the visualization objects to a data tag of the industrial control program, and
the HMI project generation component is further configured to select the data tag based on information extracted from the P&ID drawing.

6. The system of one of claims 1 to 5, wherein the drawing import component is configured to import the P&ID drawing as at least one of a portable document format, PDF, file, a computer-aided design, CAD, file, an image, or an optical scan.

7. The system of one of claims 1 to 6,
wherein the HMI project generation component is further configured to, in response to receipt, via interaction with the development interface, of an approval to add the interlock, configure the HMI interface display to render a status of the interlock.

8. A method for generating a human-machine interface, HMI, application, comprising:
importing, by an HMI development system (202) comprising a processor, a piping and instrumentation diagram, P&ID, drawing (314) representing an automation system to be monitored and controlled by an industrial controller (118);
identifying (1304), by the HMI development system based on analysis of the P&ID drawing, items of equipment (506, 508) that make up the automation system and pipe line connections (504, 510) between the items of equipment;
rendering (1306), by the HMI development system, the P&ID drawing on a development interface;
selecting (1308), by the HMI development system as selected equipment, a subset of the items of equipment identified by selection input received via the development interface;
identifying, by the HMI development system, a subset of the pipe line connections attached to the selected equipment;
generating, by the HMI development system, an HMI interface display comprising graphical objects (222) representing the selected equipment and graphical pipe lines representing the subset of the pipe line connections, wherein the HMI interface display is configured to render operational or status data generated by the automation system; and
**characterized by**
in response to determining that a combination of equipment, of the items of equipment, is associated with a design rule that defines an interlock for the combination of equipment, rendering, by the HMI development system on the development interface, a recommendation to add control programming for the interlock to an industrial control program executed by the industrial controller.

9. The method of claim 8, wherein the generating comprises drawing, by the HMI development system, one of the graphical pipe lines, corresponding to one of the pipe line connections between two of the items of equipment, in accordance with a shortest path algorithm.

10. The method of claim 8 or 9, wherein the generating comprises identifying a pipe line connection, of the subset of the pipe line connections, that is redundant or that connects to only one item of the selected equipment, and omitting the pipe line connection from the HMI interface display; or
wherein the items of equipment comprise at least one of a tank, a mixer, a sensor, a pump, or a valve.

11. The method of one of claims 8 to 10, wherein the generating comprises:
for an item of the selected equipment:
identifying a graphical object, from a library of graphical objects, corresponding to the item of the selected equipment, and
adding the graphical object to the HMI interface display.

12. The method of one of claims 8 to 11, wherein the generating comprises:
identifying, based on information extracted from the P&ID drawing, a data tag of an industrial control program that represents a property of an item of the selected equipment; and
linking an animation property of a graphical object, of the graphical objects, representing the item of the selected equipment to the data tag; or
wherein the importing the drawing comprises importing at least one of a portable document format, PDF, file, a computer-aided design, CAD, file, an image, or an optical scan.

13. A non-transitory computer-readable medium having stored thereon instructions that, in response to execution, cause a human-machine interface, HMI, development system (202) comprising a processor to perform operations, the operations comprising:
identifying (1304), based on analysis of a P&ID drawing (314) of an automation system, items of equipment (506, 508) that make up the automation system and pipe line connections (504, 510) between the items of equipment;
rendering (1306) the P&ID drawing on a development interface;
receiving (1308), via interaction with the development interface, selection input that identifies selected equipment from the items of equipment;
identifying a subset of the pipe line connections attached to the selected equipment;
generating an HMI interface display based on the selected equipment and the subset of the pipe line connections, wherein the HMI interface display is configured to render operational or status data generated by the automation system, and the generating comprises:
adding, to the HMI interface display, graphical objects representing the selected equipment, and
adding, to the HMI interface display, graphical pipe lines representing the subset
of the pipe line connections; and
**characterized by**
in response to determining that a combination of equipment, of the items of equipment, is associated with a design rule (224) specifying an interlock for the combination of equipment, rendering, on the development interface, a recommendation to add control programming for the interlock to an industrial control program.

14. The non-transitory computer-readable medium of claim 13, wherein the adding the graphical pipe lines comprises drawing a graphical pipe line, of the graphical pipe lines, corresponding to one of the pipe line connections between two of the items of equipment based on an algorithm that determines a shortest path between the two of the items of equipment; and/or
wherein the adding the graphical pipe lines comprises identifying a pipe line connection, of the subset of the pipe line connections, that is redundant or that connects to only one item of the selected equipment, and omitting the pipe line connection from the HMI interface display.

## Patentansprüche

1. System, das umfasst:
einen Prozessor (218), der funktional mit einem Speicher (220) gekoppelt und so konfiguriert ist, dass er ausführbare Komponenten ausführt, die in dem Speicher gespeichert sind, wobei die ausführbaren Komponenten umfassen:
eine Zeichnungsimport-Komponente (206), die zum Importieren einer R&I-Schema-Zeichnung (piping and instrumentation diagram, P&ID, drawing) (314) konfiguriert ist, die ein Automatisierungssystem darstellt, das von einem Industrie-Controller (118) überwacht und gesteuert werden soll;
eine Parsing-Komponente (208), die so konfiguriert ist, dass sie auf Basis von Analyse der R&I-Schema-Zeichnung Ausrüstungs-Elemente (506, 508), die das Automatisierungssystem bilden, sowie Rohrleitungsverbindungen (504, 510) zwischen den Ausrüstungs-Elementen identifiziert,
eine Benutzerschnittstellen-Komponente (204), die zum Rendern (1306) der R&I-Schema-Zeichnung an einer Entwicklungs-Schnittstelle konfiguriert ist;
eine Ausrüstungsauswahl-Komponente (210), die so konfiguriert ist, dass sie als ausgewählte Ausrüstung eine Teilgruppe der über Interaktion mit der Entwicklungs-Schnittstelle identifizierten Ausrüstungs-Elemente auswählt (1308) und eine Teilgruppe der an der ausgewählten Ausrüstung installierten Rohrleitungsverbindungen identifiziert;
eine HMI (human-machine interface)-Projektgenerierungs-Komponente, die so konfiguriert ist, dass sie eine HMI-Schnittstellen-Anzeige generiert, die Visualisierungs-Objekte (222), die die ausgewählte Ausrüstung darstellen, und grafische Rohrleitungen umfasst, die die Teilgruppe der Rohrleitungsverbindungen darstellen, wobei die HMI-Schnittstellen-Anzeige so konfiguriert ist, dass sie von dem Automatisierungssystem generierte Betriebs- oder Status-Daten visualisiert; und
**gekennzeichnet durch**
eine Verriegelungsanalyse-Komponente, die so konfiguriert ist, dass sie in Reaktion darauf, dass festgestellt wird, dass eine Ausrüstungs-Kombination der Ausrüstungs-Elemente mit einer Entwurfsregel verknüpft ist, die eine Verriegelung für die Ausrüstungs-Kombination vorgibt, an der Entwicklungs-Schnittstelle eine Empfehlung dahingehend rendert, Steuerungs-Programmierung für die Verriegelung zu einem Industrie-Steuerungsprogramm hinzuzufügen.

2. System nach Anspruch 1, wobei die HMI-Projektgenerierungs-Komponente so konfiguriert ist, dass sie wenigstens eine der grafischen Rohrleitungen, die einer der Rohrleitungs-verbindungen zwischen zwei der Ausrüstungs-Elemente entspricht, gemäß einem Shortest-Path-Algorithmus zeichnet.

3. System nach Anspruch 1 oder 2, wobei die HMI-Projektgenerierung so konfiguriert ist, dass sie eine Rohrleitungsverbindung der Teilgruppe der Rohrleitungsverbindungen identifiziert, die redundant ist oder die nur mit einem Element der ausgewählten Ausrüstung verbunden ist, und die Rohrleitungsverbindung an der HMI-Schnittstellen-Anzeige weglässt; oder
wobei die Ausrüstungs-Elemente einen Tank, einen Mischer, einen Sensor, eine Pumpe oder/und ein Ventil umfassen.

4. System nach einem der Ansprüche 1 bis 3, wobei die HMI-Projektgenerierungs-Komponente so konfiguriert ist, dass sie für ein Element der ausgewählten Ausrüstung ein Visualisierungs-Objekt aus einer Bibliothek von Visualisierungs-Objekten identifiziert, das dem Element der ausgewählten Ausrüstung entspricht, und das Visualisierungs-Objekt zu der HMI-Schnittstellen-Anzeige hinzufügt.

5. System nach einem der Ansprüche 1 bis 4, wobei
die HMI-Projektgenerierungs-Komponente des Weiteren so konfiguriert ist, dass sie eine Animationseigenschaft wenigstens eines der Visualisierungs-Objekte mit einem Daten-Tag des Industrie-Steuerungsprogramms verknüpft, und
die HMI-Projektgenerierungs-Komponente des Weiteren so konfiguriert ist, dass sie das Daten-Tag auf Basis aus der R&I-Schema-Zeichnung extrahierter Informationen auswählt.

6. System nach einem der Ansprüche 1 bis 5, wobei die Zeichnungsimport-Komponente so konfiguriert ist, dass sie die R&I-Schema-Zeichnung als eine PDF-Datei, eine CAD-Datei, ein Bild oder/und einen optischen Scan importiert.

7. System nach einem der Ansprüche 1 bis 6,
wobei die HMI-Projektgenerierungs-Komponente des Weiteren so konfiguriert ist, dass sie in Reaktion auf Empfang einer Zustimmung zum Hinzufügen der Verriegelung über Interaktion mit der Entwicklungs-Schnittstelle die HMI-Schnittstellen-Anzeige so konfiguriert, dass sie einen Status der Verriegelung rendert.

8. Verfahren zum Generieren einer HMI (human-machine interface)-Anwendung, umfassend:
Importieren durch ein HMI-Entwicklungssystem (202), das einen Prozessor umfasst, einer R&I-Schema-Zeichnung (314), die ein Automatisierungssystem darstellt, das von einem Industrie-Controller (118) überwacht und gesteuert werden soll;
Identifizieren (1304) von Ausrüstungs-Elementen (506, 508), die das Automatisierungssystem bilden, sowie von Rohrleitungsverbindungen (504, 510) zwischen den Ausrüstungs-Elementen durch das HMI- Entwicklungssystem auf Basis von Analyse der R&I-Schema-Zeichnung;
Rendern (1306) der R&I-Schema-Zeichnung an einer Entwicklungs-Schnittstelle durch das HMI-Entwicklungssystem;
Auswählen (1308) einer Teilgruppe der mittels über die Entwicklungs-Schnittstelle empfangener Auswahl-Eingabe identifizierten Ausrüstungs-Elemente als ausgewählte Ausrüstung;
Identifizieren einer Teilgruppe der an der ausgewählten Ausrüstung installierten Rohrleitungs-verbindungen durch das HMI-Entwicklungssystem;
Generieren einer HMI-Schnittstellen-Anzeige, die grafische Objekte (222), die die ausgewählte Ausrüstung darstellen, und grafische Rohrleitungen umfasst, die die Teilgruppe der Rohrleitungsverbindungen darstellen, durch das HMI-Entwicklungssystem, wobei die HMI-Schnittstellen-Anzeige so konfiguriert ist, dass sie von dem Automatisierungssystem generierte Betriebs- oder Status-Daten rendert; und
**gekennzeichnet durch**
Rendern einer Empfehlung dahingehend, Steuerungs-Programmierung für eine Verriegelung zu einem Industrie-Steuerungsprogramm hinzuzufügen, durch das HMI-Entwicklungssystem an der Entwicklungs-Schnittstelle in Reaktion auf Feststellung dahingehend, dass eine Ausrüstungs-Kombination der Ausrüstungs-Elemente mit einer Entwurfsregel verknüpft ist, die eine Verriegelung für die Ausrüstungs-Kombination vorgibt.

9. Verfahren nach Anspruch 8, wobei das Generieren Zeichnen einer der grafischen Rohrleitungen, die einer der Rohrleitungsverbindungen zwischen zwei der Ausrüstungs-Elemente entspricht, durch das HMI-Entwicklungssystem entsprechend einem Shortest-Path-Algorithmus umfasst.

10. Verfahren nach Anspruch 8 oder 9, wobei das Generieren Identifizieren einer Rohrleitungsverbindung der Teilgruppe der Rohrleitungsverbindungen, die redundant ist oder die nur mit einem Element der ausgewählten Ausrüstung verbunden ist, sowie Weglassen der Rohrleitungsverbindung an der HMI-Schnittstellen- Anzeige umfasst; oder
wobei die Ausrüstungs-Elemente einen Tank, einen Mischer, einen Sensor, eine Pumpe oder/und ein Ventil umfassen.

11. Verfahren nach einem der Ansprüche 8 bis 10, wobei das Generieren umfasst:
für ein Element der ausgewählten Ausrüstung:
Identifizieren eines grafischen Objektes aus einer Bibliothek grafischer Objekte, das dem Element der ausgewählten Ausrüstungen entspricht, sowie Hinzufügen des grafischen Objektes zu der HMI-Schnittstellen-Anzeige.

12. Verfahren nach einem der Ansprüche 8 bis 11, wobei das Generieren umfasst:
Identifizieren eines Daten-Tags eines Industrie-Steuerungsprogramms, das eine Eigenschaft eines Elementes der ausgewählten Ausrüstung darstellt, auf Basis aus der R&I-Schema-Zeichnung extrahierter Informationen;
sowie
Verknüpfen einer Animationseigenschaft eines grafischen Objekts der grafischen Objekte, die das Element der ausgewählten Ausrüstung darstellen, mit dem Daten-Tag;
oder
wobei das Importieren der Zeichnung Importieren einer PDF-Datei, einer CAD- Datei, eines Bildes oder/und eines optischen Scans umfasst.

13. Nichtflüchtiges computerlesbares Medium, auf dem Anweisungen gespeichert sind, die in Reaktion auf Ausführung ein HMI-Entwicklungssystem (202), das einen Prozessor umfasst, veranlassen, Funktionsvorgänge durchzuführen, wobei die Funktionsvorgänge umfassen:
Identifizieren (1304) von Ausrüstungs-Elementen (506, 508), die ein Automatisierungssystem bilden, sowie von Rohrleitungsverbindungen (504, 510) zwischen den Ausrüstungs-Elementen auf Basis von Analyse einer R&I-Schema-Zeichnung (314) des Automatisierungssystems;
Rendern (1306) der R&I-Schema-Zeichnung an einer Entwicklungs-Schnittstelle;
Empfangen (1308) von Auswahl-Eingabe, die aus den Ausrüstungs-Elementen ausgewählte Ausrüstung identifiziert, über Interaktion mit der Entwicklungs-Schnittstelle;
Identifizieren einer Teilgruppe der an der ausgewählten Ausrüstung installierten Rohrleitungsverbindungen;
Generieren einer HMI-Schnittstellen-Anzeige auf Basis der ausgewählten Ausrüstung und der Teilgruppe von Rohrleitungsverbindungen, wobei die HMI-Schnittstellen-Anzeige so konfiguriert ist, dass sie durch das Automatisierungssystem generierte Betriebs- oder Status-Daten rendert, und das Generieren umfasst:
Hinzufügen grafischer Objekte, die die ausgewählte Ausrüstung darstellen, zu der HMI-Schnittstellen-Anzeige, sowie
Hinzufügen grafischer Rohrleitungen, die die Teilgruppe der Rohrleitungsverbindungen darstellen, zu der HMI-Schnittstellen-Anzeige; und
**gekennzeichnet durch**
Rendern einer Empfehlung dahingehend, Steuerungs-Programmierung für eine Verriegelung zu einem Industrie-Steuerungsprogramm hinzuzufügen, an der Entwicklungs-Schnittstelle in Reaktion darauf, dass festgestellt wird, dass eine Ausrüstungs-Kombination der Ausrüstungs-Elemente mit einer Entwurfsregel (224) verknüpft ist, die die Verriegelung für die Ausrüstungs-Kombination vorgibt,.

14. Nicht-flüchtiges computerlesbares Medium nach Anspruch 13, wobei das Hinzufügen der grafischen Rohrleitungen Zeichnen einer grafischen Rohrleitung der grafischen Rohrleitungen umfasst, die einer der Rohrleitungsverbindungen zwischen zwei der Ausrüstungs-Elemente entspricht, auf Basis eines Algorithmus, der einen kürzesten Weg zwischen den zwei der Ausrüstungs-Elemente bestimmt; und/oder wobei das Hinzufügen der grafischen Rohrleitungen Identifizieren einer Rohrleitungsverbindung der Teilgruppe der Rohrleitungsverbindungen, die redundant ist oder die nur mit einem Element der ausgewählten Ausrüstung verbunden ist, sowie Weglassen der Rohrleitungsverbindung an der HMI-Schnittstellen- Anzeige umfasst.

## Revendications

1. Système, comprenant :
un processeur (218), couplé de manière opérationnelle à une mémoire (220), configuré pour exécuter des composants exécutables stockés dans la mémoire, les composants exécutables comprenant :
un composant d'importation de dessin (206) configuré pour importer un dessin (314) de diagramme de tuyauterie et d'instrumentation (P&ID) représentant un système d'automatisation devant être surveillé et contrôlé par un contrôleur industriel (118) ;
un composant d'analyse (208) configuré pour identifier (1304), sur la base de l'analyse du dessin P&ID, les éléments d'équipement (506, 508) qui composent le système d'automatisation et les raccordements de tuyauterie (504, 510) entre les éléments d'équipement ;
un composant d'interface utilisateur (204) configuré pour rendre (1306) le dessin P&ID sur une interface de développement ;
un composant de sélection d'équipement (210) configuré pour sélectionner (1308), en tant qu'équipement sélectionné, un sous-ensemble des éléments d'équipement identifiés *via* l'interaction avec l'interface de développement, et pour identifier un sous-ensemble des raccordements de tuyauterie attachés à l'équipement sélectionné ;
un composant de génération de projet (212) d'interface homme-machine, IHM, configuré pour générer un affichage d'interface comprenant des objets (222) de visualisation représentant l'équipement sélectionné et des lignes des tuyauterie graphiques représentant le sous-ensemble des raccordements de tuyauterie, dans lequel l'affichage d'interface IHM est configuré pour visualiser les données opérationnelles ou d'état générées par le système d'automatisation ; et
**caractérisé par**
un composant d'analyse de verrouillage configuré pour, en réponse à la détermination qu'une combinaison d'équipements, parmi les éléments d'équipement, est associée à une règle de conception spécifiant un verrouillage pour la combinaison d'équipements, rendre, sur l'interface de développement, une recommandation pour ajouter la programmation de contrôle pour le verrouillage à un programme de contrôle industriel.

2. Système selon la revendication 1, dans lequel le composant de génération de projet IHM est configuré pour dessiner au moins l'une des lignes de tuyauterie graphiques correspondant à l'un des raccordements de tuyauterie entre deux des équipements conformément à un algorithme du chemin le plus court.

3. Système selon la revendication 1 ou 2, dans lequel la génération du projet IHM est configurée pour identifier un raccordement de tuyauterie, dans le sous-ensemble des raccordements de tuyauterie, qui est redondant ou qui ne se connecte qu'à un seul élément de l'équipement sélectionné, et pour omettre le raccordement de tuyauterie de l'affichage d'interface IHM ; ou
dans lequel les équipements comprennent au moins un réservoir, un mélangeur, un capteur, une pompe ou une vanne.

4. Système selon l'une des revendications 1 à 3, dans lequel le composant de génération de projet IHM est configuré pour, pour un élément de l'équipement sélectionné, identifier un objet de visualisation, à partir d'une bibliothèque d'objets de visualisation, correspondant à l'élément de l'équipement sélectionné, et ajouter l'objet de visualisation à l'affichage d'interface IHM.

5. Système selon l'une des revendications 1 à 4, dans lequel
le composant de génération de projet IHM est en outre configuré pour lier une propriété d'animation d'au moins un des objets de visualisation à une balise de données du programme de contrôle industriel, et
le composant de génération de projet IHM est en outre configuré pour sélectionner la balise de données sur la base des informations extraites du dessin P&ID.

6. Système selon l'une des revendications 1 à 5, dans lequel le composant d'importation de dessin est configuré pour importer le dessin P&ID sous la forme d'au moins un fichier PDF (Portable Document Format), d'un fichier de CAO (Conception Assistée par Ordinateur), d'une image ou d'un balayage optique.

7. Système selon l'une des revendications 1 à 6, dans lequel le composant de génération de projet IHM est en outre configuré pour, en réponse à la réception, *via* l'interaction avec l'interface de développement, d'une approbation d'ajout du verrouillage, configurer l'affichage d'interface IHM afin de rendre compte de l'état du verrouillage.

8. Procédé de génération d'une application d'interface homme-machine, IHM, comprenant :
l'importation, par un système de développement IHM (202) comprenant un processeur, d'un dessin (314) de diagramme de tuyauterie et d'instrumentation (P&ID) représentant un système d'automatisation devant être surveillé et contrôlé par un contrôleur industriel (118) ;
l'identification (1304), par le système de développement IHM sur la base de l'analyse du dessin P&ID, des éléments d'équipement (506, 508) qui composent le système d'automatisation et les raccordements de tuyauterie (504, 510) entre les éléments d'équipement ;
le rendu (1306), par le système de développement IHM, du dessin P&ID sur une interface de développement ;
la sélection (1308), par le système de développement IHM en tant qu'équipement sélectionné, d'un sous-ensemble des éléments d'équipement identifiés par l'entrée de sélection reçue *via* l'interface de développement ;
l'identification, par le système de développement IHM, d'un sous-ensemble des raccordements de tuyauterie attachés à l'équipement sélectionné ;
la génération, par le système de développement IHM, d'un affichage d'interface IHM comprenant des objets (222) graphiques représentant l'équipement sélectionné et des lignes de tuyauterie graphiques représentant le sous-ensemble des raccordements de tuyauterie, dans lequel l'affichage d'interface IHM est configuré pour restituer les données opérationnelles ou d'état générées par le système d'automatisation ; et
**caractérisé par**
en réponse à la détermination qu'une combinaison d'équipements, parmi les éléments d'équipement, est associée à une règle de conception qui définit un verrouillage pour la combinaison d'équipements, rendre, par le système de développement IHM sur l'interface de développement, une recommandation pour ajouter la programmation de contrôle pour le verrouillage à un programme de contrôle industriel exécuté par le contrôleur industriel.

9. Procédé selon la revendication 8, dans lequel la génération comprend le dessin, par le système de développement IHM, de l'une des lignes de tuyauterie graphiques, correspondant à l'un des raccordements de tuyauterie entre deux des équipements, conformément à un algorithme du chemin le plus court.

10. Procédé selon la revendication 8 ou 9, dans lequel la génération comprend l'identification d'un raccordement de tuyauterie, dans le sous-ensemble des raccordements de tuyauterie, qui est redondant ou qui ne se connecte qu'à un seul élément de l'équipement sélectionné, et l'omission du raccordement de tuyauterie de l'affichage d'interface IHM ; ou
dans lequel les équipements comprennent au moins un réservoir, un mélangeur, un capteur, une pompe ou une vanne.

11. Procédé selon l'une des revendications 8 à 10, dans lequel la génération comprend les étapes consistant à :
pour un élément de l'équipement sélectionné :
identifier, dans une bibliothèque d'objets graphiques, un objet graphique correspondant à l'élément de l'équipement sélectionné, et
ajouter l'objet graphique à l'affichage d'interface IHM.

12. Procédé selon l'une des revendications 8 à 11, dans lequel la génération comprend :
l'identification, sur la base des informations extraites du dessin P&ID, d'une balise de données d'un programme de contrôle industriel qui représente une propriété d'un élément de l'équipement sélectionné ; et
la liaison d'une propriété d'animation d'un objet graphique, parmi les objets graphiques, représentant l'élément de l'équipement sélectionné à la balise de données ; ou
dans lequel l'importation du dessin comprend l'importation d'au moins un fichier PDF (Portable Document Format), d'un fichier CAO (Conception Assistée par Ordinateur), d'une image ou d'un balayage optique.

13. Support non transitoire lisible par ordinateur sur lequel sont stockées des instructions qui, en réponse à l'exécution, amènent un système de développement d'interface homme-machine (202), IHM, comprenant un processeur à effectuer des opérations, les opérations comprenant les étapes consistant à :
identifier (1304), sur la base de l'analyse d'un dessin P&ID (314) d'un système d'automatisation, les éléments d'équipement (506, 508) qui composent le système d'automatisation et les raccordements de tuyauterie (504, 510) entre les éléments d'équipement ;
rendre (1306) le dessin P&ID sur une interface de développement ;
recevoir (1308), *via* l'interaction avec l'interface de développement, d'une entrée de sélection qui identifie l'équipement sélectionné parmi les éléments d'équipement ;
identifier un sous-ensemble des raccordements de tuyauterie attachés à l'équipement sélectionné ;
générer un affichage d'interface IHM basé sur l'équipement sélectionné et le sous-ensemble des raccordements de tuyauterie, dans lequel l'affichage d'interface IHM est configuré pour rendre les données opérationnelles ou d'état générées par le système d'automatisation, et la génération comprend :
l'ajout, à l'affichage d'interface IHM, des objets graphiques représentant l'équipement sélectionné, et
l'ajout, à l'affichage d'interface IHM, des lignes de tuyauterie graphiques représentant le sous-ensemble des raccordements de tuyauterie ; et
**caractérisé par**
en réponse à la détermination qu'une combinaison d'équipements, parmi les éléments d'équipement, est associée à une règle de conception (224) spécifiant un verrouillage pour la combinaison d'équipements, rendre, sur l'interface de développement, une recommandation pour ajouter la programmation de contrôle pour le verrouillage à un programme de contrôle industriel.

14. Support non transitoire lisible par ordinateur selon la revendication 13, dans lequel l'ajout des lignes de tuyauterie graphiques comprend le dessin d'une ligne de tuyauterie graphique, parmi les lignes de tuyauterie graphiques, correspondant à l'un des raccordements de tuyauterie entre deux des éléments d'équipement sur la base d'un algorithme qui détermine le chemin le plus court entre les deux éléments d'équipement ; et/ou
dans lequel l'ajout des lignes de tuyauterie graphiques comprend l'identification d'un raccordement de tuyauterie, dans le sous-ensemble des raccordements de tuyauterie, qui est redondant ou qui ne se connecte qu'à un seul élément de l'équipement sélectionné, et l'omission du raccordement de tuyauterie de l'affichage d'interface IHM.
